# EUROPÄISCHE PATENTSCHRIFT

(11) **EP 3 673 316 B1**
(45) Veröffentlichungstag und Bekanntmachung des Hinweises auf die Patenterteilung: **18.12.2024**
(21) Anmeldenummer: 18762798.9
(22) Anmeldetag: 23.08.2018
(51) Int. Cl.: G02B 27/01

(54) **GEKRÜMMTER LICHTLEITER, ABBILDUNGSOPTIK UND HMD**
CURVED LIGHT GUIDE, IMAGING OPTICAL UNIT AND HMD
GUIDE DE LUMIÈRE INCURVÉ, OPTIQUE D'IMAGERIE ET HMD

(30) Priorität: 24.08.2017 DE 102017119440
(43) Veröffentlichungstag der Anmeldung: 01.07.2020
(73) Patentinhaber: Tooz Technologies GmbH, 73430 Aalen (DE)
(72) Erfinder: MÜNZ, Holger, 73430 Aalen (DE)
(74) Vertreter: PATERIS Patentanwälte PartmbB
(86) Internationale Anmeldenummer: PCT/EP2018/072757
(87) Internationale Veröffentlichungsnummer: WO 2019/038374

(56) Entgegenhaltungen:
- EP-A1- 2 246 728
- DE-A1- 102015 116 297
- DE-A1- 102015 122 055
- US-A1- 2012 300 311
- US-A1- 2015 205 141

## Beschreibung

Die vorliegende Erfindung betrifft einen gekrümmten Lichtleiter für ein HMD (Head Mounted Display), also für eine am Kopf zu tragende Anzeigevorrichtung. Daneben betrifft die Erfindung eine Abbildungsoptik für ein HMD sowie das HMD selbst.

Ein HMD ist ein Anzeigesystem, bei dem ein Ausgangsbild mit Hilfe einer Abbildungsoptik in das Blickfeld des Trägers des HMD abgebildet wird. Häufig ist es dabei wünschenswert, neben dem bereit gestellten Bild auch einen ungestörten Blick auf die Umgebung zuzulassen. Diese Anordnung verhindert Lösungen, bei denen ein intransparenter Bildgeber und eine dazugehörige Abbildungsoptik direkt vor dem Auge angeordnet werden. In einer Klasse von HMDs, die gelegentlich auch Datenbrillen genannt werden, werden daher die Ausgangsbilder üblicherweise außerhalb des Sichtbereichs des Auges generiert, und das erzeugte Ausgangsbild wird mit Hilfe einer Abbildungsoptik in der gewünschten Blickrichtung vor das Auge eingespiegelt. Hierzu umfasst das HMD beispielsweise einen Lichtleiter, über den der Abbildungsstrahlengang zum Generieren des virtuellen Bildes durch innere Reflektion von einer außerhalb des Sichtfeldes gelegenen Einkoppelstruktur zu einer im Sichtfeld des Auges gelegenen zumindest teilweise transparenten Auskoppelstruktur geleitet wird. Das Ein- und Auskoppeln kann dabei mittels refraktiver Strukturen, mittels reflektiver Strukturen oder mittels diffraktiver Strukturen erfolgen. Diffraktive Ein- und Auskoppelstrukturen sind beispielsweise in DE 10 2015 122 055 A1, in US 2006/012181 A1 und in US 2010/0220295 A1 beschrieben. Beispiele für reflektive oder refraktive Ein- oder Auskoppelstrukturen sind beispielsweise in US 2012/00002294 A1, in DE 10 2011 007 812 , in WO 2015/075206 A1 und WO 2015/075207A1 A1 beschrieben.

Um eine große Ausgangspupille zu erzielen, schlägt die US 8,320,032 B2 eine Mehrfachauskopplung vor. Während die US 8,320,032 B2 einen planaren Lichtleiter beschreibt, wird in der US 8,830,584 B2 das Prinzip der Mehrfachauskopplung auf sphärische Lichtleiter übertragen. Für eine ideale Mehrfachauskopplung müssen im Falle eines sphärisch-konzentrischen Lichtleiters die Auskopplungsstrukturen parallel zu den Breitenkreisen auf der Sphäre liegen. Damit kann Licht von der Einkoppelstruktur auf die Auskoppelstruktur übertragen und dort mehrfach ausgekoppelt werden. So lässt sich eine ideale Punkt-zu-Punkt-Abbildung im Zentrum der Sphäre realisieren. Eine Mehrfachauskopplung ist darüber hinaus auch in DE 10 2015 122 055 A1 beschrieben.

In US 2013/0088780 A1 wird das Prinzip der Punkt-zu-Punkt-Abbildung dazu verwendet, mittels mehrerer Lichtleiter verschiedene Fokusebenen zu realisieren. Dabei müssen jedoch die Lichtleiter vom Auge weg gekrümmt sein, so dass die Lichtleiter vom Auge aus gesehen eine konvexe Krümmung aufweisen. Aus ästhetischen Gründen sollten die Lichtleiter vom Auge aus gesehen jedoch eine konkave Krümmung aufweisen, so dass das Head Mounted Display die Form einer gewöhnlichen Brille annehmen kann.

In US 8,842,368 B2 ist zudem ein Head Mounted Display mit diffraktiver Ein- und Auskopplung beschrieben, in dem gekrümmte diffraktive Strukturen verwendet werden, um eine Pupillenabbildung zu generieren. Mit einer Mehrfachauskopplung wäre diese Pupillenabbildung jedoch nicht verträglich.

In US 2012/0300311 A1 ist ein Head-Mounted Display mit einem zylindrisch gekrümmten Lichtleiter und diffraktiver Ein- und Auskopplung beschrieben. Um zu erreichen, dass ein in den Lichtleiter eingekoppeltes kollimiertes Bild als ein kollimiertes Bild mit einer vergrößerten Austrittspupille ausgekoppelt werden kann, weisen das Einkoppelgitter und das Auskoppelgitter in Krümmungsrichtung des Lichtleiters variable Gitterabstände auf.

In der DE 10 2012 213 685 A1 ist eine Anzeigevorrichtung beschrieben, in der in einen gekrümmten Lichtleiter eingekoppelte Strahlenbündel vor dem Einkoppeln mittels einer zwischen dem Bildgeber und dem Lichtleiter angeordneten Zusatzoptik in kollimierte Strahlenbündel umgewandelt werden und als kollimierte Strahlenbündel aus dem Lichtleiter ausgekoppelt werden. Das Kollimieren kann statt von der Zusatzoptik 9 von dem zur Einkopplung verwendeten Einkoppelgitter übernommen werden.

Die DE 10 2015 122 055 A1 beschreibt eine Anzeigevorrichtung, die eine Korrekturanordnung zum Korrigieren von Abbildungsfehlern umfasst.

Die DE 10 2008 009 095 A1 beschreibt ein Durchlicht-Display-System, in dem ein Bild durch eine Scheibe sichtbar ist, in die ein von einem Bildgeber auf einer Streuscheibe erzeugtes Zwischenbild mittels einer Abbildungslinse eingekoppelt wird. Zwischen der Streuscheibe und der Abbildungslinse ist eine Korrekturlinse angeordnet, mit deren Hilfe die Bildqualität optimiert werden soll.

Die DE 602 05 722 T2 beschreibt ein Relais-Linsensystem, das ein durch eine Bildquelle erzeugtes Bild auf ein vor einem Auge zu tragendes gekrümmtes Visier projiziert, von wo das vom Relais-Linsensystems kommende Licht in Richtung auf das Auge reflektiert wird. Das Relais-Linsensystem beinhaltet ein optisches Element, welches eine chromatische Korrektur durchführt.

Die WO 2008/023367 A1 beschreibt ein Einkopplungsmodul zum Einkoppeln eines Strahlengangs in einen Lichtleiter. Das Einkopplungsmodul umfasst einen Polarisationsstrahlteiler und eine Verzögerungsplatte.

In US 2012/0300311 A1 ist ein Head-Mounted Display mit einem zylindrisch gekrümmten Lichtleiter beschrieben. Eine durch die Krümmung verursachte optische Wirkung des gekrümmten Lichtleiters wird mithilfe der Einkoppelstruktur und der Auskoppelstruktur ausgeglichen. Mit diesem Lichtleiter wird erreicht, dass ein in den Lichtleiter eingebrachtes kollimiertes Bild auch wieder als kollimiertes Bild mit einer vergrößerten Ausgangspupille aus dem Lichtleiter ausgekoppelt wird.

Die DE 10 2015 116 297 A1 beschreibt eine Abbildungsoptik mit einem Brillenglas und einem Optikelement, das auch als abbildender Lichtleiter bezeichnet wird, über welches ein Lichtstrahl in das Brillenglas eingekoppelt wird. Das Brillenglas kann eine sphärische Krümmung aufweisen.

Gegenüber dem genannten Stand der Technik ist es eine erste Aufgabe der vorliegenden Erfindung, einen vorteilhaften Lichtleiter für ein HMD zur Verfügung zu stellen, der bei vom Auge aus gesehen konkav gekrümmtem Lichtleiter das Generieren eines virtuellen Bildes im unendlichen oder in einer festgelegten Distanz vor dem Auge ermöglicht. Eine weitere Aufgabe der vorliegenden Erfindung ist es, eine vorteilhafte Abbildungsoptik für eine HMD zur Verfügung zu stellen mit der das Generieren eines virtuellen Bildes im unendlichen oder in einer festgelegten Bildebene vor dem Auge bei Verwendung eines vom Auge aus gesehen sphärisch-konkav gekrümmten Lichtleiters möglich ist.

Eine dritte Aufgabe der vorliegenden Erfindung ist es, ein HMD zur Verfügung zu stellen, welches einen vom Auge aus gesehen sphärisch-konkav gekrümmten Lichtleiter aufweist und das in der Lage ist, ein virtuelles Bild im unendlichen oder einer festgelegten Bildebene vor dem Auge zu generieren.

Die erste Aufgabe wird durch einen gekrümmten Lichtleiter nach Anspruch 1 gelöst, die zweite Aufgabe durch eine Abbildungsoptik nach Anspruch 10 und die dritte Aufgabe durch ein HMD nach Anspruch 15.

Die abhängigen Ansprüche enthalten vorteilhafte Ausgestaltungen der Erfindung.

Ein erfindungsgemäßer gekrümmter Lichtleiter für ein HMD ist bei bestimmungsgemäßem Gebrauch vor wenigstens einem Auge angeordnet und weist vom Auge aus gesehen eine sphärisch-konkave Krümmung auf. Er umfasst eine zum Auge weisende Rückfläche sowie eine vom Auge weg weisende Vorderfläche. Außerdem umfasst er eine Einkoppelstruktur zum Einkoppeln von Licht in den Lichtleiter derart, dass Licht unter Reflektion an der Vorderfläche und/oder an der Rückfläche durch den Lichtleiter geleitet wird, und eine Auskoppelstruktur zum Auskoppeln des durch den Lichtleiter geleiteten Lichts. Ein solcher Lichtleiter übt auf das eingekoppelte Licht eine sammelnde Wirkung aus. Erfindungsgemäß weist der Lichtleiter daher eine zerstreuende Struktur auf, deren Brennweite betragsmäßig kleiner oder gleich dem Krümmungsradius des Lichtleiters ist. Die zerstreuende Struktur kann der Auskoppelstruktur oder der Einkoppelstruktur überlagert sein, so dass kein zusätzliches optisches Element in den Lichtleiter integriert werden muss. Es besteht aber auch die Möglichkeit, die Brennweite der zerstreuenden Struktur auf zwei Unterstrukturen aufzuteilen und die eine Unterstruktur der Einkoppelstruktur und die andere Unterstruktur der Auskoppelstruktur zu überlagern.

Durch die Integration einer zerstreuenden Struktur in den Lichtleiter wird es möglich, den Lichtleiter zum Generieren eines virtuellen Bildes, welches sich vom Auge aus gesehen jenseits des Lichtleiters befindet, zu nutzen. Wenn dabei die Brennweite der zerstreuenden Struktur betragsmäßig gleich dem Krümmungsradius des Lichtleiters ist, befindet sich das Bild im unendlichen, wenn die Brennweite der zerstreuenden Struktur betragsmäßig kleiner als der Krümmungsradius des Lichtleiters ist, also die zerstreuende Wirkung der zerstreuenden Struktur größer als die sammelnde Wirkung des Lichtleiters ist, befindet sich das virtuelle Bild in einem Abstand vom Auge, welcher sich nach der Stärke der zerstreuenden Wirkung, d.h. nach der Brennweite der zerstreuenden Struktur bestimmt.

Die zerstreuende Struktur kann insbesondere eine Beugungslinse, bspw. in Form eines Volumenhologramms oder eines Blazegitters, sein. Die zerstreuende Wirkung der Beugungslinse wird durch ihre Brennweite bestimmt. Um eine virtuelles Bild im Unendlichen zu generieren findet dabei eine Beugungslinse Verwendung, deren Brennweite betragsmäßig gleich dem Krümmungsradius des Lichtleiters ist. Dies gilt insbesondere dann, wenn im Lichtleiter die Krümmungsmittelpunkte der Vorderfläche und der Rückfläche zusammenfallen. Fallen die Krümmungsmittelpunkte der Vorderfläche und der Rückfläche nicht zusammen oder weist der Lichtleiter eine nicht von der beanspruchten Erfindung gedeckte von der sphärischen Krümmung abweichende Krümmung auf, beispielsweise weil er im Rahmen einer Datenbrille gleichzeitig zur Korrektur einer Fehlsichtigkeit herangezogen werden soll, gilt diese Beziehung lediglich näherungsweise. Die genaue Brennweite der Beugungslinse zum Generieren eines virtuellen Bildes ist dann abhängige von der konkreten Krümmung des Lichtleiters und kann ggf. näherungsweise oder experimentell bestimmt werden. Beispielsweise kann die Brennweite der Beugungslinse kleiner oder gleich dem kleineren der beiden Krümmungsradien der Vorderfläche und der Rückfläche des Lichtleiters sein, wenn die Krümmungsmittelpunkte der Vorderfläche und der Rückfläche nicht zusammenfallen. In diesem Fall befindet sich das virtuelle Bild ggf. nicht im Unendlichen, jedoch in einem großen Abstand vom Lichtleiter, so dass es sich als näherungsweise im Unendlichen befindend angesehen werden kann. Im Falle einer experimentellen Bestimmung kann bspw. derjenige Punkt ermittelt werden, bei dem ein von einer Punktlichtquelle ausgehendes divergentes Strahlenbündel vom Lichtleiter ohne die zerstreuende Struktur ins Unendliche abgebildet wird und der Abstand dieses Punktes von der Rückfläche des Lichtleiters als dessen Krümmungsradius angesehen werden.

Eine Beugungslinse fokussiert das Licht in den Brennpunkt mittels Interferenz, wobei im Brennpunkt eine konstruktive Interferenz und außerhalb des Brennpunkts eine destruktive Interferenz vorliegt. Typischerweise wird der Brennpunkt von dem bei der Beugung auftretenden ersten Beugungsmaximum gebildet. Zum Herbeiführen der entsprechenden Beugung kann die Beugungslinse entweder sich abwechselnde transparente und intransparente Zonen aufweisen oder sich abwechselnde Zonen mit einer kürzeren und einer längeren optischen Weglänge für das für die Beugungslinse passierende Licht. Die Abstände und die Breite der Zonen der Beugungslinse richten sich dabei nach der Wellenlänge des Lichtes und der gewünschten Brennweite der Beugungslinse. Im Falle sich abwechselnder transparenter und intransparenter Zonen wird die Beugung dadurch erzeugt, dass nur bestimmte Teile der Wellenfront die Beugungslinse passieren können, wobei die passierenden Teile in bestimmten Richtungen konstruktiv miteinander interferieren und in anderen Richtungen destruktiv miteinander interferieren. Im Falle von Zonen mit unterschiedlichen optischen Weglängen erfolgt beim Durchgang der Wellenfront durch die unterschiedlichen Zonen der Beugungslinse eine Phasenverschiebung zwischen den die unterschiedlichen Zonen passierenden Teilen der Wellenfront. Diese Phasenverschiebung führt dazu, dass die unterschiedlichen Teile der Wellenfront in bestimmten Richtungen konstruktiv miteinander interferieren und in anderen Richtungen destruktiv miteinander interferieren. Die Ausgestaltung der Beugungslinse mit transparenten und intransparenten Zonen bietet die Möglichkeit, die Beugungslinse mit relativ einfachen Mitteln herzustellen. Die Herstellung einer Beugungslinse mit Zonen unterschiedlicher optischer Weglängen bietet dagegen den Vorteil, dass sie bei einer Augmented Reality-Anwendung keinen Einfluss auf das von außen durch den Lichtleiter hindurchtretende Umgebungslicht ausübt und somit die Wahrnehmung der Umgebung nicht schwächt.

Die zerstreuende Struktur führt jedoch zu einem Farblängsfehler und einem Farbquerfehler. Ein Farblängsfehler bedeutet, dass die Brennpunkte von Licht unterschiedlicher Farben (Wellenlängen) in unterschiedlichen Abständen zur zerstreuenden Struktur liegen, so dass in einen bestimmten Brennpunkt nur Licht einer Farbe fokussiert ist, während das Licht anderer Farben in diesem Brennpunkt einen leichten Defokus aufweist. Ein Farbquerfehler ist dagegen die Folge unterschiedlicher Abbildungsmaßstäbe der zerstreuenden Struktur für Licht unterschiedlicher Farben (Wellenlängen) des durch den Lichtleiter geleiteten Lichtes, was zu farbigen Rändern in der Abbildung führt. Während der Farblängsfehler in der Regel klein genug ist, um auf eine Korrektur verzichten zu können, kann der Farbquerfehler am Feldrand des Bildfeldes so groß werden, dass er als störend wahrgenommen wird. Um den durch die zerstreuende Struktur induzierten Farbquerfehler zu minimieren, ist es daher vorteilhaft, wenn die zerstreuende Wirkung der zerstreuenden Struktur auf die Mitte des Bildfeldes zentriert ist.

Durch den Lichtleiter kann jeweils nur ein bestimmtes Winkelspektrum des Strahlengangs übertragen werden. Je kleiner das Winkelspektrum ist, desto kleiner ist das durch den Lichtleiter übertragbare Bildfeld. Um für ein großes Bildfeld ein großes Winkelspektrum übertragen zu können, besteht die Möglichkeit, dass die Einkoppelstruktur sowie die Auskoppelstruktur jeweils mehrere Unterstrukturen umfassen, welche unterschiedliche Teile des Winkelspektrums des Lichtes in den Lichtleiter einkoppeln bzw. aus dem Lichtleiter auskoppeln. Diese unterschiedlichen Teile des Winkelspektrums können dann so ausgelegt sein, dass sie jeweils dem Maximum des von dem Lichtleiter übertragbaren Winkelspektrums entsprechen. Das gesamte Winkelspektrum des übertragenen Lichtes ergibt sich dann aus der Zusammensetzung der beiden Teile, so dass insgesamt ein großes Winkelspektrum übertragen werden kann, so dass ein großes Bildfeld generierbar ist.

Darüber hinaus sind diffraktive Ein- und Auskoppelstrukturen jeweils für eine bestimmte Längenwelle optimiert. Mit zunehmender Abweichung von dieser optimierten Wellenlänge entsteht keine für die Auskopplung nutzbare Interferenz mehr. Das mittels der Ein- und Auskoppelstrukturen ein- bzw. ein auszukoppelnde Wellenlängenspektrum des Lichtes ist daher begrenzt. Wenn ein Bild mit einem breiten Wellenlängenspektrum, idealer Weise ein Farbbild, generiert werden soll, ist es daher vorteilhaft, wenn die Auskoppelstruktur jeweils mehrere Unterstrukturen umfasst, welche unterschiedliche Teile des Spektralbereiches des in den Lichtleiter einzukoppelnden Lichtes in den Lichtleiter einkoppeln bzw. aus dem Lichtleiter auskoppeln. Um ein Farbbild generieren zu können, sind daher in einer besonderen Ausgestaltung des erfindungsgemäßen Lichtleiters eine Einkoppelstruktur und eine Auskoppelstruktur vorhanden, die jeweils drei Unterstrukturen umfasst, wovon beispielsweise eine für blaues Licht, eine für grünes Licht und eine weitere für rotes Licht optimiert ist. Wenn dann noch das Winkelspektrum in mehrere Teile aufgeteilt wird, müssen diese Unterstrukturen jeweils mehrfach vorhanden sein, nämlich jeweils einmal für jeden Teil des Winkelspektrums. Insgesamt ergeben sich somit im Falle eines in zwei Teile aufgeteilten Winkelspektrums und drei Farben sechs Unterstrukturen. Soll das Winkelspektrum in n Teile aufgeteilt werden, ergeben sich entsprechend 3n Unterstrukturen für die Einkoppelstruktur und 3n Unterstrukturen für die Auskoppelstruktur. Dabei besteht die Möglichkeit, die unterschiedlichen Spektralbereiche und/oder die unterschiedlichen Teile des Winkelspektrums durch einen gemeinsamen Lichtleiter zu leiten, oder den Lichtleiter in mehrere Unterlichtleiter aufzuteilen, die unterschiedliche spektrale Wellenlängenbereiche und/oder unterschiedliche Teile des Winkelspektrums leiten. Diese Unterlichtleiter können dabei als getrennte Übertragungskanäle angesehen werden. Das Vorhandensein unterschiedlicher Übertragungskanäle ermöglicht es, ein Übersprechen der übertragenen Signale zuverlässig zu vermeiden. Das Übertragen mehrerer Spektralbereiche und/oder Teile des Winkelspektrums durch einen gemeinsamen Lichtleiter reduziert dagegen die Komplexität des Lichtleiters und vereinfacht dadurch seine Herstellung.

Die Einkopplung der Lichtstrahlen in den Lichtleiter erfolgt derart, dass die eingekoppelte Lichtstrahlen entlang von Großkreisen verlaufen, die auf der sphärischen Vorderfläche und/oder der sphärischen Rückfläche des Lichtleiters durch diejenigen Punkte verläuft, die in Kugelkoordinaten durch die Polarwinkel 0° und 180° gegeben sind. Diese Punkte sind in der Regel selbst nicht Teil der sphärischen Vorderfläche und/oder der sphärischen Rückfläche des Lichtleiters, da diese nur einen Ausschnitt einer diese Punkte enthaltenden gedachten Kugeloberfläche darstellen. Auf der Erdoberfläche entsprechen derartige Großkreise den Längenkreisen. Die Großkreise werden daher im Folgenden als Längenkreise des Lichtleiters bezeichnet. Auf diese Weise existiert für alle Längenkreise, entlang derer die eingekoppelten Lichtstrahlen verlaufen, ein alle diese Längenkreise im rechten Winkel schneidender Großkreis, also ein Großkreis, der von den Lichtstrahlen im rechten Winkel passiert wird oder passiert würde, falls die Lichtstrahlen bereits vor dem Erreichen dieses Großkreises ausgekoppelt werden. Der die Längenkreise im rechten Winkel schneidende Großkreis verläuft damit im Wesentlichen parallel zu den Strukturelementen der Einkoppelstruktur und der Auskoppelstruktur, d.h. parallel zu den Gitterstrukturen im Falle einer diffraktiven Ein- und Auskopplung bzw. parallel zu den Grenzlinien zwischen Fresnel-Strukturen im Falle einer reflektiven oder refraktiven Ein- und Auskopplung. Auf der Erdoberfläche würde der schneidende Großkreis dem Äquator entsprechen. Der die Längenkreise im rechten Winkel schneidende Großkreis wird daher im Folgenden Äquator des Lichtleiters genannt. Dabei ist es besonders vorteilhaft, wenn die zerstreuende Struktur in die Auskoppelstruktur integriert ist, da dann der Verlauf der Lichtstrahlen entlang von Längenkreisen innerhalb des Lichtleiters durch die zerstreuende Wirkung der zerstreuenden Struktur nicht beeinflusst wird. Der Verlauf der Lichtstrahlen entlang von Längenkreisen innerhalb des Lichtleiters eröffnet die Möglichkeit, die Auskopplungsstruktur erfindungsgemäß näher als die Einkoppelstruktur am Äquator des Lichtleiters anzuordnen. Dabei kann es vorteilhaft sein wenn, die Auskoppelstruktur nicht weiter als 5 Grad, vorzugsweise nicht weiter als 3 Grad vom Äquator des Lichtleiters angeordnet ist. Insbesondere kann die Auskopplungsstruktur dabei so angeordnet sein, dass der Äquator des Lichtleiters auch die Auskoppelstruktur schneidet, insbesondere so, dass der Äquator auch die Auskoppelstruktur symmetrisch schneidet. Durch die Nähe der Auskopplungsstruktur zum Äquator des Lichtleiters schneiden die Längenkreise, entlang derer sich die Lichtstrahlen ausbreiten, die Strukturelemente der Auskoppelstruktur nahezu im rechten Winkel, so dass die Lichtstrahlen nahezu im rechten Winkel auf die Strukturelemente der Auskoppelstruktur auftreffen. Dadurch können Unterschiede in der Pupillenform, die auf eine unterschiedliche Anzahl an Reflektionen innerhalb des Lichtleiters zurückzuführen sind minimiert werden. Unterschiedliche Anzahlen der Reflektionen innerhalb des Lichtleiters können dazu führen, dass die Beugungslinse an verschiedenen Orten genutzt wird, was zu einer Pupillenverzerrung führen kann, die ggf. korrigiert werden muss. Mit der äquatornahen Anordnung der Auskoppelstruktur kann die Pupillenverzerung verringert und ggf. minimiert werden.

Erfindungsgemäß wird außerdem eine Abbildungsoptik mit einem Abbildungsstrahlengang, einem Lichtleiter und wenigstens einem bildformenden optischen Element zur Verfügung gestellt. Die erfindungsgemäße Abbildungsoptik zeichnet sich dadurch aus, dass sie einen erfindungsgemäßen Lichtleiter umfasst, wobei der Lichtleiter als das wenigstens eine bildformende optische Element dient. Die Abbildungsoptik kann dabei insbesondere auch ausschließlich aus dem erfindungsgemäßen Lichtleiter bestehen. Dadurch, dass der Lichtleiter gleichzeitig als bildformendes optisches Element fungiert, wird es möglich, eine kompakte Abbildungsoptik herzustellen. Der erfindungsgemäße Lichtleiter ermöglicht es dabei, bei einer vom Auge aus gesehen konkaven Krümmung des Lichtleiters, insbesondere einer sphärische-konkaven Krümmung des Lichtleiters, ein virtuelles Bild bereit zu stellen, welches sich vom Auge aus gesehen in einem endlichen oder unendlichen Abstand jenseits des Lichtleiters befindet.

In einer Weiterbildung der erfindungsgemäßen Abbildungsoptik ist der Einkoppelstruktur des Lichtleiters im Abbildungsstrahlengang ein Korrekturelement zum Vorabkorrigieren einer vom Lichtleiter induzierten trapezförmigen Pupillenverzeichnung vorgelagert. Dieses Korrekturelement generiert eine zur vom Lichtleiter induzierten Pupillenverzeichnung inverse Pupillenverzeichnung. Die beiden Pupillenverzeichnungen kompensieren sich dann gegenseitig. Zusätzlich oder alternativ kann der Einkoppelstruktur des Lichtleiters im Abbildungsstrahlengang eine einen statischen Farbquerfehler kompensierende Kompensationsoptik vorgelagert sein. Der statische Farbquerfehler wird von dem die zerstreuende Struktur enthaltenden Lichtleiter induziert und ist von der Augenbewegung unabhängig. Er kann daher mit einer optischen Kompensationsoptik ohne weiteres kompensiert werden. Diese Kompensationsoptik induziert einen den vom Lichtleiter induzierten Farbquerfehler inversen Farbquerfehler, so dass sich die beiden Farbquerfehler aufheben. Wenn der Einkoppelstruktur des Lichtleiters im Abbildungsstrahlengang ein Manipulator vorgelagert ist, der ein diffraktives optisches Element und ein refraktives optisches Element umfasst, die senkrecht zur optischen Achse des Abbildungsstrahlengangs relativ zueinander verschiebbar angeordnet sind, und außerdem ein Eye-Tracker zum Erfassen der Blickrichtung des Auges vorhanden ist, ist es zudem möglich, einen dynamischen, feldkonstanten Farbquerfehler, der vom Lichtleiter herbeigefügt wird, vorab zu korrigieren. Ein dynamischer Farbquerfehler kommt durch Augenbewegungen zustande, zumindest dann, wenn die chromatische Bandbreite des übertragenen Lichtes eine gewisse Schwelle überschreitet.

Außerdem können der Einkoppelstruktur des Lichtleiters im Abbildungsstrahlengang ein Polarisationsstrahlenteiler und eine Verzögerungsplatte vorgelagert sein. Polarisationsstrahlteiler in Verbindung mit der Verzögerungsplatte ermöglicht die Einkopplung des Abbildungsstrahlengangs durch die Einkoppelstruktur bei gleichzeitig kompakten Abmessungen der Abbildungsoptik.

Gemäß einem weiteren Aspekt der Erfindung wird ein HMD mit einem Display zum Darstellen eines Ausgangsbildes und einer erfindungsgemäßen Abbildungsoptik zum Generieren eines virtuellen Bildes von dem Ausgangsbild zur Verfügung gestellt. Da die erfindungsgemäße Abbildungsoptik wegen der Verwendung des Lichtleiters als einem bildformenden optischen Element kompakt ausgebildet sein kann, ist es möglich, durch die Verwendung der erfindungsgemäßen Abbildungsoptik auch ein kompaktes HMD zur Verfügung zu stellen, welches es ermöglicht, bei einem vom Auge aus gesehen konkav gekrümmten Lichtleiter ein virtuelles Bild zu generieren, welches sich vom Auge aus gesehen jenseits des Lichtleiters im Unendlichen oder in einem bestimmten Abstand vom Lichtleiter befindet..

Weitere Merkmale, Eigenschaften und Vorteile der vorliegenden Erfindung ergeben sich aus der nachfolgenden Beschreibung von Ausführungsbeispielen unter Bezugnahme der beiliegenden Figuren.
- Figur 1: zeigt eine ideale Punkt-Zug-Punkt-Abbildung, wie sie mit einem sphärischen Lichtleiter zu erreichen ist, welche zum Verständnis der beanspruchten Erfindung nützlich ist.
- Figur 2: zeigt einen gekrümmten Lichtleiter mit einer Abbildung nach unendlich.
- Figur 3: zeigt ein Beispiel für eine diffraktive Auskopplungsstruktur zum Auskoppeln eines durch den Lichtleiter übertragenen Strahlenbündels.
- Figur 4: zeigt eine Beugungslinse.
- Figur 5: zeigt die aus einer Überlagerung der Auskopplungsstruktur aus Figur 3 und der Beugungslinse aus Figur 4 resultierende Auskopplungsstruktur.
- Figur 6: ist eine Darstellung zum Veranschaulichen des Feldwinkels eines betrachteten Displays.
- Figur 7: zeigt, wie der Feldwinkel aus Figur 6 auf zwei unterschiedliche Lichtleiter aufgeteilt werden kann.
- Figur 8: zeigt das Auskoppeln der durch die Lichtleiter aus Figur 7 übertragenen Strahlenbündel.
- Figur 9: zeigt einen Lichtleiter mit drei Unterstrukturen, von denen jede zum Auskoppeln eines anderen Spektralbereichs geeignet ist.
- Figur 10: zeigt eine Ausführungsvariante einer Abbildungsoptik mit einem Wellenfrontmanipulator zum Korrigieren eines durch den Lichtleiter induzierten Farbquerfehlers.
- Figur 11: zeigt eine Ausführungsvariante einer Abbildungsoptik mit einem der Einkoppelstruktur des Lichtleiters vorgelagerten Korrekturelement zum Korrigieren einer durch den Lichtleiter induzierten Pupillenverzeichnung.
- Figur 12: zeigt ein Beispiel für eine kompakte Abbildungsoptik.

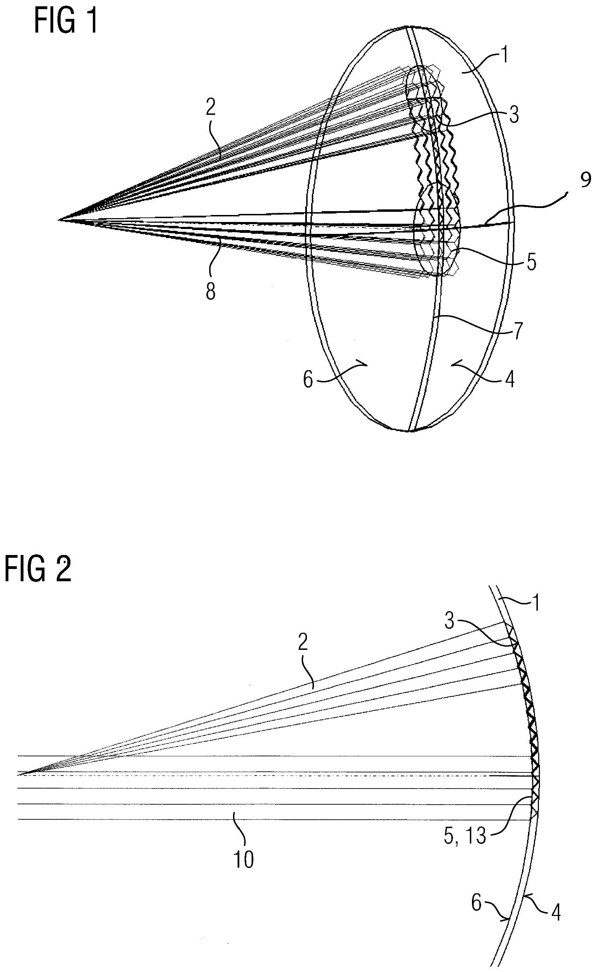

Bevor nachfolgend mit Bezug auf Figur 2 auf das der Erfindung zugrunde liegende Prinzip eingegangen wird, wird mit Bezug auf Figur 1 die Wirkung eines sphärischen Lichtleiters erläutert.

In Figur 1 ist ein sphärischer Lichtleiter 1 gezeigt, der eine am Rand des Lichtleiters gelegene diffraktive Einkoppelstruktur 3 und eine im Zentrum des Lichtleiters gelegene diffraktive Auskoppelstruktur 5 aufweist. Die Verbindungslinie zwischen dem Zentrum der Einkoppelstruktur 3 und dem Zentrum der Auskoppelstruktur 5 erstreckt sich im Wesentlichen entlang eines Längenkreises 7 der Sphäre des Lichtleiters 1, also entlang eines Großkreises, der durch diejenigen Punkte einer Sphäre, von der der Lichtleiter einen Teil darstellt, die in Kugelkoordinaten durch die Polarwinkel 0° und 180° gegeben sind, verläuft. Die Auskoppelstruktur 5 befindet sich im vorliegenden Ausführungsbeispiel auf dem Äquator 9 dieser Sphäre, derart, dass sie vom Äquator 9 symmetrisch geschnitten wird.

Die diffraktive Einkoppelstruktur 3 und die diffraktive Auskoppelstruktur 5 sind jeweils durch Beugungsgitter mit einem bestimmten Gittervektor gebildet, deren Gitterlinien parallel zu Breitenkreisen, also parallel zum Äquator 9 verlaufen. Mittels des die diffraktive Einkoppelstruktur 3 bildenden Beugungsgitters wird ein vom Zentrum des Sphäre des Lichtleiters 1 ausgehendes divergentes Strahlenbündel 2 derart abgelenkt, dass die einzelnen Strahlen des Strahlenbündels im Lichtleiter 1 derart auf die im bestimmungsgemäßen Gebrauch des Lichtleiters in einem HMD vom Auge weg weisende Vorderfläche 4 des Lichtleiters 1 auftreffen, dass durch Totalreflektion in Richtung auf die im bestimmungsgemäßen Gebrauch des Lichtleiters in einem HMD zum Auge weisende Rückfläche 6 des Lichtleiters 1 reflektiert werden, wo sie wiederum durch Totalreflektion in Richtung auf die Vorderfläche 4 des Lichtleiters 1 reflektiert werden. Auf diese Weise werden die Strahlen des Strahlenbündels durch mehrfache Totalreflektion an der Vorderfläche 4 und der Rückfläche 6 des Lichtleiters 1 zur Auskoppelstruktur 5 geleitet, wo sie mittels des Beugungsgitters derart abgelenkt werden, dass sie aus der Rückfläche 6 des Lichtleiters 1 heraustreten. Das aus der Rückfläche 6 des Lichtleiters 1 heraustretende Strahlenbündel ist dabei ein derart konvergentes Strahlenbündel 8, dass seine Strahlen wieder auf das Zentrum der Sphäre des Lichtleiters 1 fokussiert werden. Der in Figur 1 gezeigte Lichtleiter 1 mit der diffraktiven Einkoppelstruktur 3 und der diffraktiven Auskoppelstruktur 5 bildet somit eine im Zentrum der Sphäre des Lichtleiters 1 gelegenen Punkt ideal auf sich selbst ab.

Zur Verwendung als Teil einer Abbildungsoptik eines HMDs ist der Lichtleiter 1, wie er in Figur 1 gezeigt ist, jedoch nur bedingt nützlich. In einem HMD ist es üblicherweise gewünscht, ein Bild im Unendlichen zu generieren, das der Nutzer des HMD mit entspanntem Auge betrachten kann, oder ein Bild, das sich in einem definierten Abstand vom Auge jenseits des Lichtleiters befindet, so dass der Nutzer den Eindruck hat, das Bild schwebe in einem bestimmten Abstand vor seinem Auge. Mit anderen Worten, eine den Lichtleiter umfassende Abbildungsoptik soll in der Lage sein, ein virtuelles Bild jenseits des Lichtleiters zu generieren. Zwar bestünde grundsätzlich die Möglichkeit, dass durch die Auskoppelstruktur 5 ausgekoppelte Strahlenbündel mittels einer zwischen der Auskoppelstruktur und dem Auge angeordneten Linse eine derartige virtuelle Abbildung zu generieren. Jedoch ist das Anordnen einer Linse zwischen dem Lichtleiter und dem Auge nicht wünschenswert, da einerseits zwischen dem Lichtleiter und dem Auge nur wenig Raum für eine solche Linse vorhanden ist und andererseits eine Gefährdung des Auges durch ein unmittelbar vor dem Auge befindliches optisches Element bei einem Schlag auf das HMD vermieden werden soll. Außerdem würde die Linse auch auf das Bild der Umgebung einwirken.

Erfindungsgemäß wird daher vorgeschlagen, in den Lichtleiter 1 selbst eine zerstreuende Struktur zu integrieren, deren Brennweite ihrem Betrag nach kleiner oder gleich dem Krümmungsradius des Lichtleiters 1 ist. Durch diese zerstreuende Struktur wird das mittels der Auskoppelstruktur 5 aus dem Lichtleiter 1 ausgekoppelte Strahlenbündel wie in Figur 2 dargestellt zu einem parallelen Strahlenbündel 10, wenn die Brennweite der zerstreuenden Struktur ihrem Betrag nach gleich dem Krümmungsradius des Lichtleiters 1 ist, oder zu einem divergenten Strahlenbündel, wenn die Brennweite der zerstreuenden Struktur ihrem Betrag nach kleiner als der Krümmungsradius des Lichtleiters 1 ist (in der Figur nicht dargestellt). Wenn die Brennweite der zerstreuenden Struktur ihrem Betrag nach gleich dem Krümmungsradius des Lichtleiters 1 ist, stellt der Lichtleiter 1 somit ein bildformendes optisches Element einer Abbildungsoptik dar, die ein virtuelles Bild im Unendlichen generiert. Wenn die Brennweite der zerstreuenden Struktur ihrem Betrag nach dagegen kleiner als der Krümmungsradius des Lichtleiters 1 ist, ist das aus dem Lichtleiter 1 ausgekoppelte Strahlenbündel divergent, so dass der Lichtleiter 1 ein bildformendes optisches Element einer Abbildungsoptik darstellt, die ein virtuelles Bild in einem definierten Abstand vom Auge jenseits des Lichtleiters 1 generiert. Die Abbildungsoptik kann dabei alleine aus dem Lichtleiter bestehen oder weitere optische Elemente umfassen, etwa Elemente zum Korrigieren von Bildfehlern, wie weiter unten noch beschrieben wird.

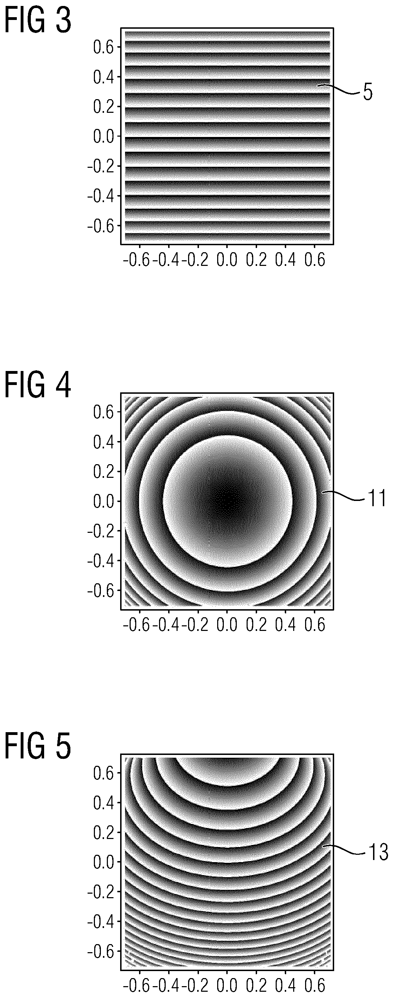

Die zerstreuende Struktur kann eine in den Lichtleiter 1 integrierte refraktive, reflektive oder diffraktive Struktur sein. Im vorliegenden Ausführungsbeispiel findet eine diffraktive Struktur in Form einer Beugungslinse Verwendung. Die Verwendung einer diffraktiven Struktur ist dabei insofern vorteilhaft, als das sie sehr dünn hergestellt werden kann, so dass die Dicke des Lichtleiters 1 nicht bzw. nicht wesentlich anwachsen muss. Zudem kann die diffraktive zerstreuende Struktur in die diffraktive Auskoppelstruktur 5 und/oder die diffraktive Einkoppelstruktur 3 integriert werden. Im Falle einer Mehrfachauskopplung ist es besonders vorteilhaft, die diffraktive zerstreuende Struktur in die diffraktive Auskoppelstruktur 5 zu integrieren, da dadurch der Lichtweg im Glas nicht beeinflusst wird. Dies wird nachfolgend anhand der Figuren 3 bis 5 am Beispiel der Integration in die Auskoppelstruktur 5 erläutert.

Figur 3 zeigt eine beispielhafte diffraktive Auskoppelstruktur 5 in Form eines Beugungsgitters, wobei die Graustufen den zu erzeugenden Phasenhub im Bereich von 0-1 λ angeben. Die Auskoppelstruktur weist parallele Gitterstrukturen auf, die sich im vorliegenden Ausführungsbeispiel entlang von Breitenkreisen der Sphäre des Lichtleiters 1 erstrecken. Eine diffraktive Auskoppelstruktur 5, wie sie in Figur 3 gezeigt ist, führt zu dem in Figur 1 gezeigten konvergenten Strahlenbündel 8 und damit zu der Punkt-Zug-Punkt-Abbildung aus Figur 1.

Figur 4 zeigt eine Beugungslinse 11. Im vorliegenden Ausführungsbeispiel ist die Brennweite der Beugungslinse 11 gleich dem Krümmungsradius der Sphäre des Lichtleiters 1. Die Beugungslinse 11 ist ein konzentrisches Beugungsgitter, mit einer ringartigen Gitterstruktur. Die ringartige Gitterstruktur kann dabei entweder durch im Wechsel angeordnete ringförmige transparente und intransparente Zonen gebildet sein oder durch im Wechsel angeordnete ringförmige Zonen mit unterschiedlichen optischen Weglängen, so dass durch benachbarte Zonen hindurchtretende Strahlen eine unterschiedliche Phasenverschiebung erfahren. In beiden Fällen tritt nach dem Durchtritt durch die Beugungslinse eine Interferenz auf, welche die Strahlen in bestimmten Raumregionen durch konstruktive Interferenz verstärkt und in anderen Raumregionen durch destruktive Interferenz abschwächt. Die Ablenkwinkel, unter denen konstruktive und destruktive Interferenz auftritt, hängen dabei vom Abstand zwischen zwei benachbarten ringförmigen Strukturen ab. Je enger der Abstand, desto größer sind die Winkel, in denen das Beugungsmaximum der ersten Ordnung (also die erste konstruktive Interferenz) auftritt. Durch Verringern der Abstände zum Rand der Beugungslinse hin können die Ablenkwinkel so aneinander angepasst werden, dass sich die abgelenkten Strahlen mit konstruktiver Interferenz in einem bestimmten Abstand von der Linse treffen. Dieser Abstand ist dann der Fokusabstand der Beugungslinse 11. Dabei kann beispielsweise die Beugungsordnung +1 zum Sammeln von auf die Beugungslinse 11 einfallendem Licht und die Beugungsordnung -1 zum Zerstreuen von auf die Beugungslinse 11 einfallendem Licht herangezogen werden.

Wenn die Beugungsordnung +1 genutzt wird, würde also ein paralleles Strahlenbündel zu einem konvergenten Strahlenbündel, welches im Fokus der Beugungslinse 11 fokussiert ist. Bei Verwendung der Beugungsordnung --1 würde ein paralleles Strahlenbündel dagegen beim Durchtritt durch die Beugungslinse 11 zu einem divergenten Strahlenbündel werden. Im vorliegenden Ausführungsbeispiel ist die Beugungslinse 11 so ausgebildet, dass die Beugungsordnung -1 Verwendung findet.

Die in Figur 4 gezeigte Beugungslinse 11 wird dem Auskoppelgitter der Auskoppelstruktur 5, wie sie in Figur 3 gezeigt ist, überlagert. Das Ergebnis der Überlagerung ist in Figur 5 dargestellt. Eine derartige Auskoppelstruktur 13 findet in dem in Figur 2 dargestellten Linsenlichtleiter 1 anstelle der Auskopplungsstruktur 5 aus Figur 5 Verwendung.

Wie bereits erwähnt ist die zerstreuende Wirkung im vorliegenden Ausführungsbeispiel in Form der Beugungslinse 11 vollständig in die Auskoppelstruktur 13 integriert. Es besteht aber grundsätzlich auch die Möglichkeit, die zerstreuende Struktur beispielsweise in Form der beschriebenen Beugungslinse in die Einkoppelstruktur 3 zu integrieren. Zudem besteht auch die Möglichkeit, sowohl in die Einkoppelstruktur 3 als auch in die Auskoppelstruktur 13 jeweils eine zerstreuende Wirkung zu integrieren, die in ihrer Summe der zerstreuenden Wirkung der Beugungslinse aus Figur 4 entspricht. Entsprechende aufgeteilte Beugungslinsen kann ein Fachmann ohne weiteres konstruieren. Eine ausschließlich in die Auskoppelstruktur 13 integrierte zerstreuende Struktur bietet jedoch gegenüber den anderen Varianten den Vorteil, dass die zerstreuende Wirkung die Lichtleitung durch den Lichtleiter nicht beeinflusst.

Die mit Bezug auf die Figuren 3 bis 5 beschriebenen Gitterstrukturen mit unterschiedlichen optischen Weglängen können beispielsweise mittels holographischer Belichtung auf der gekrümmten Fläche des Lichtleiters hergestellt werden. Zwar besteht grundsätzlich auch die Möglichkeit, Gitterstrukturen durch transparente und intransparente Bereiche des Lichtleiters zu erzeugen, wobei die intransparenten Bereiche bspw. aufgedruckt sein können, dies hat jedoch einen Lichtverlust für das durch den Lichtleiter hindurchtretende Umgebungslicht zur Folge. Insbesondere im Rahmen eines als Augmented Reality Display ausgebildeten HMDs, bei dem das darzustellende Bild als in die Umgebung eingeblendet wahrgenommen werden soll, bieten Gitterstrukturen mit unterschiedlichen optischen Weglängen jedoch den Vorteil, dass das Umgebungslicht nicht abgeschwächt wird.

Weiterhin sei erwähnt, dass die Lage der Einkoppelstruktur 3 und die Lage der Auskoppelstruktur 13 auf den Lichtleiter grundsätzlich frei gewählt werden können. Zu beachten ist allerdings, dass die zu einem Feldpunkt gehörenden Strahlen innerhalb des Lichtleiters entlang nicht paralleler Großkreis verlaufen, was je nach Lage der Einkoppelstruktur und der Auskoppelstruktur zu mehr oder weniger trapezförmiger Pupillenverzeichnung und damit zu Astigmatismus im Feld führt. Idealerweise liegt die Auskoppelstruktur daher in der Nähe des Äquators 7 der Sphäre des Lichtleiters 1, um die Pupillenverzeichnung und damit den Astigmatismus zu minimieren. Typischerweise lassen sich so bei einem Pupillendurchmesser von 3 mm eine geometrische Punktgröße am Feldrand von 1 bis 2 Bogenminuten erreichen, was in der Regel als nicht weiter störend empfunden wird.

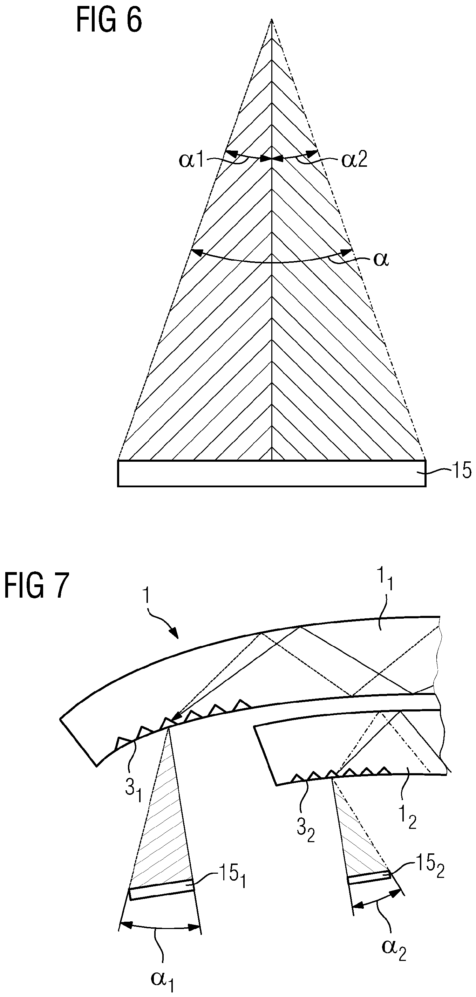

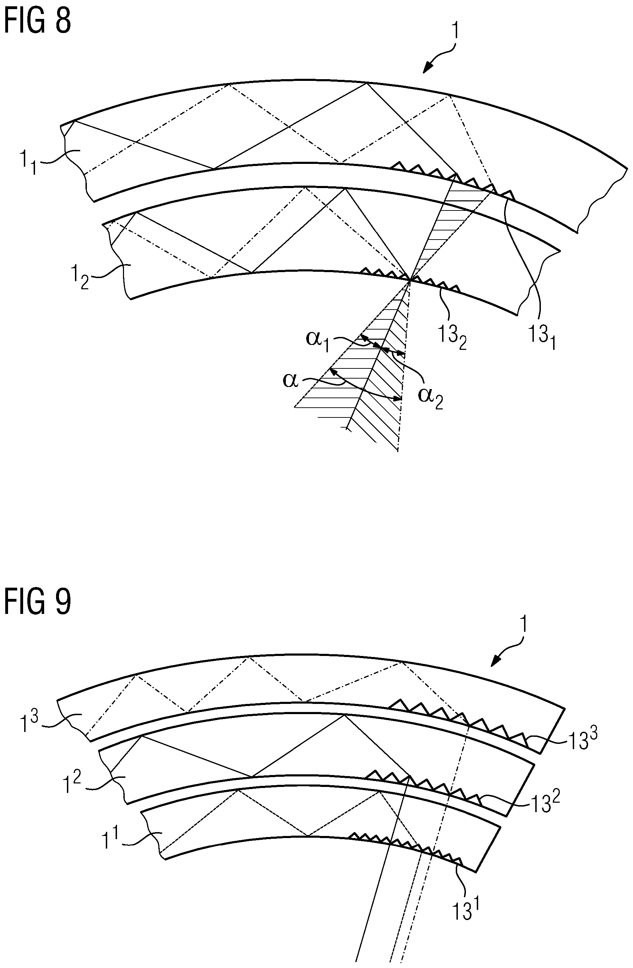

Im mit Bezug auf Figur 2 beschriebenen Ausführungsbeispiel für die Erfindung dient ein Lichtleiter 1 mit einer einzigen lichtleitenden Struktur zum Leiten des Lichtes von der Einkoppelstruktur 3 zu der Auskoppelstruktur 13. Mit einem solchen Lichtleiter sind die zu übertragenen Feldwinkelbereiche relativ begrenzt und reichen nicht aus, um ein Bild im 16:9 Format mit einer Bilddiagonale von 70° zu übertragen. Um dennoch die Übertragung eines derartigen Bildes zu ermöglichen, wird ein Feldwinkelbereich, welcher sich über einen Feldwinkel α erstreckt, in mehrere Teilfeldwinkelbereiche aufgeteilt, und diese Teilfeldwinkelbereiche werden dann getrennt voneinander durch den Lichtleiter übertragen. Dies wird nachfolgend am Beispiel einer Aufteilung des sich über den Feldwinkel α erstreckenden Feldwinkelbereiches in zwei Feldwinkelbereiche, die sich über Feldwinkel α1, α2 erstrecken, beschrieben. Die Aufteilung des Feldwinkelbereiches in zwei Feldwinkelbereiche ist in Figur 6 schematisch dargestellt. Die Figur zeigt ein Display 15 und den Feldwinkel α, unter dem das Display 15 betrachtet wird. Dieser Feldwinkel wird in zwei Feldwinkel α1 und α2 aufgeteilt, die im vorliegenden Beispiel einander nicht überlappen. Es besteht jedoch grundsätzlich auch die Möglichkeit, einen Überlapp der Teilfeldwinkel α₁, α₂ zuzulassen. Die Teilfeldwinkel α₁, α₂ können dabei so gewählt werden, dass sie jeweils den größten von einem Lichtleiter, wie er in Figur 2 dargestellt ist, übertragbaren Feldwinkelbereich abdecken. Um den gesamten durch den Feldwinkel α gegebenen Feldwinkelbereich zu übertragen, werden dann zwei Lichtleiter wie sie mit Bezug auf Figur 2 beschrieben worden sind und die im Folgenden als Unterlichtleiter 1₁, 1₂ des Lichtleiters 1 bezeichnet werden, hintereinander angeordnet. Diese Anordnung ist schematisch in den Figuren 7 und 8 dargestellt. Die Figur 7 zeigt dabei in einem Schnitt entlang eines Längenkreises die beiden hintereinander angeordneten Unterlichtleiter 1₁ und 1₂ mit den Einkoppelstrukturen 3₁ und 3₂. Jeder der Einkoppelstrukturen 3₁, 3₂ ist ein eigenes Display 15₁, 15₂ zugeordnet, welches jeweils den unter dem entsprechenden Feldwinkelbereich α1, α2 wahrzunehmenden Bildbereich darstellen. Wie bereits erwähnt, sind die Feldwinkel α₁, α₂ so gewählt, dass die durch sie abgedeckten Feldwinkelbereiche von dem jeweiligen Lichtleiter 1₁, 1₂ vollständig übertragen werden können. Wenn beispielsweise der Feldwinkel α 40° beträgt und der zugehörige Feldwinkelbereich von -20° bis +20° verläuft, können die Teilfeldwinkel α₁, α₂ beispielsweise 20° betragen, wobei der Teilfeldwinkel α1 einen Feldwinkelbereich von -20° bis 0° und der Teilfeldwinkel α₂ einen Feldwinkelbereich von 0° bis +20° abdeckt. Da die hintereinander angeordneten Unterlichtleiter 1₁, 1₂ gemeinsam, das vollständige Bild übertragen, bilden diese gemeinsam den Lichtleiter 1.

Die Auskopplung aus dem aus Unterlichtleitern 1₁, 1₂ aufgebauten Lichtleiter 1 ist in Figur 8 schematisch dargestellt. Jeder der Unterlichtleiter 1₁, 1₂ weist eine Auskoppelstruktur 13₁, 13₂ auf, die im Wesentlichen der Auskoppelstruktur 13 aus Figur 2 entspricht. Jedoch sind die Strukturen der Grundgitter 5, denen die Beugungslinse überlagert ist, so gewählt, dass das durch die Unterlichtleiter 1₁, 1₂ geleitete Licht in den korrekten Winkeln ausgekoppelt wird. Die Einkoppelstrukturen 3₁, 3₂ sind entsprechend an die Grundgitter der Auskoppelstrukturen 13₁, ₁3₂ angepasst. Im Ergebnis werden die durch die Teilfeldwinkel α₁, α₂ definierten Feldwinkelbereiche wieder zu dem Feldwinkelbereich mit dem Öffnungswinkel α zusammengesetzt. Dieses Vorgehen wird auch Field Stitching genannt und ist in WO 2017/102795 A1 ausführlich beschrieben. Auf diese Druckschrift wird hinsichtlich weiterer Einzelheiten zum Fields Stitching verwiesen.

Durch das Verwenden einer geeigneten Anzahl von Unterlichtleitern im Lichtleiter 1 kann ein hinreichend großes Sichtfeld realisiert werden. Da insbesondere diffraktive Einkoppel- und Auskoppelstrukturen sehr flach hergestellt werden können, kann auch eine größere Anzahl von Unterlichtleitern hintereinander angeordnet werden.

Darüber hinaus ist es in der Regel mit einer einzigen Einkoppelstruktur und einer einzigen Auskoppelstruktur nicht möglich, das gesamte Wellenlängenspektrum von sichtbarem Licht durch einen einzigen Lichtleiter zu übertragen. Es besteht jedoch die Möglichkeit, den Lichtleiter mit Unterlichtleitern zu versehen, von denen jeder zum Übertragen eines anderen Wellenlängenberichtes des sichtbaren Lichtes ausgelegt ist. So kann beispielsweise ein Unterlichtleiter mit seiner Einkoppelstruktur und seiner Auskoppelstruktur derart ausgelegt sein, dass er rotes Licht überträgt, ein anderer Unterlichtleiter mit seiner Einkoppelstruktur und seiner Auskoppelstruktur derart, dass sie grünes Licht überträgt und ein dritter Unterlichtleiter mit seiner Einkoppelstruktur und seiner Auskoppelstruktur derart, dass er blaues Licht überträgt. Auf diese Weise kann ein komplettes Farbbild mittels dreier Unterlichtleiter übertragen werden. Dies ist schematisch in Figur 9 gezeigt, die einen Lichtleiter 1 mit drei Unterlichtleitern 1¹, 1², 1³ und den zugehörigen Auskoppelstrukturen 13¹, 13², 13^{3,} zeigt. Jeder Unterlichtleiter 1¹, 1², 1³ mit seiner zugehörigen Einkoppelstruktur (nicht dargestellt) und seiner Auskoppelstruktur 13¹, 13², 13^{3,} ist zum Übertragen einer Farbe ausgelegt, beispielsweise der erste Unterlichtleiter 1¹ zum übertragen von rotem Licht, der zweite Unterlichtleiter 1² zum Übertragen von grünem Licht und der dritte Unterlichtleiter 1³ zum Übertragen von blauem Licht. Insgesamt kann daher mit den drei Unterlichtleitern 1¹, 1², 1³ ein Farbbild übertragen werden.

Wenn, wie mit Bezug auf die Figuren 6 bis 8 mehrerer Feldwinkelbereiche übertragen werden sollen und jeder Feldwinkelbereich ein Farbbild repräsentieren soll, sind für jeden durch einen Teilfeldwinkel α1, α2 definierten Feldwinkelbereich jeweils drei Unterstrukturen 1¹, 1², 1³ für rotes, grünes und blaues Licht notwendig. Insgesamt sind im obigen Beispiel dann sechs Unterlichtleiter vorhanden, je drei für den durch den Teilfeldwinkel α1 definierten Feldwinkelbereich und je drei für den durch den Teilfeldwinkel α2 definierten Feldwinkelbereich. Wie bereits erwähnt, lassen sich die Unterlichtleiter mit diffraktiver Einkopplung und diffraktiver Auskopplung recht dünn herstellen, so dass ein Lichtleiter 1 mit sechs Unterstrukturen ohne Probleme mit einer akzeptablen Gesamtdicke herstellbar ist.

Die in Figur 4 dargestellte Beugungslinse 11 ist nicht farbkorrigiert. Dies hängt damit zusammen, dass die Winkel, unter denen konstruktive Interferenz auftritt, von der Wellenlänge des Lichtes abhängen. Die fehlende Farbkorrektur führt zu einem Farblängsfehler und einem Farbquerfehler.

Der Farblängsfehler resultiert dabei aus der Tatsache, dass sich die Winkel für das erste Beugungsmaximum voneinander unterscheiden, so dass die Linse für unterschiedliche Wellenlängen unterschiedliche Brennweiten besitzt. Wenn die Beugungslinse bspw. so ausgelegt ist, dass ihre Brennweite für grünes Licht dem Krümmungsradius des Lichtleiters entspricht, ist die Brennweite für rotes Licht etwas geringer und die Brennweite für blaues Licht etwas größer als der Krümmungsradius des Lichtleiters 1, so dass eine gewisse Bildunschärfe im roten und blauen Teil des Bildes auftritt, wenn der grüne Teil des Bildes scharf ist. Bei einer Bandbreite von 50 nm bei einer Wellenlänge 500 nm (grünes Licht) beträgt der Schärfeverlust durch die Unschärfe im roten und blauen Bildbestandteil ca. 0,6 dpt, wenn von einem Krümmungsradius des Lichtleiters 1 und eine Brennweite der Beugungslinse 11 von jeweils 150 mm ausgegangen wird. Ein Schärfeverlust von 0,6 dpt kann als noch akzeptabel angesehen werden.

Der Farbquerfehler beruht auf der aus den unterschiedlichen Brennweiten resultierenden unterschiedlichen Vergrößerung und somit den unterschiedlichen Abbildungsmaßstab der einzelnen Farben in der jeweiligen Brennebene. Während der Farbquerfehler auf der optischen Achse nicht in Erscheinung tritt, nimmt er mit Abstand von der optischen Achse immer mehr zu. Wenn, die Austrittspupille der Beugungslinse 20 mm hinter der Auskoppelstruktur liegt, treten am Feldrand eines Bildfeldes von ±12° Farbquerfehler auf, die in einer Größenordnung von rund 10 Bogenminuten am Feldrand liegen. Ein derartiger Farbquerfehler ist nicht mehr akzeptabel und muss korrigiert werden.

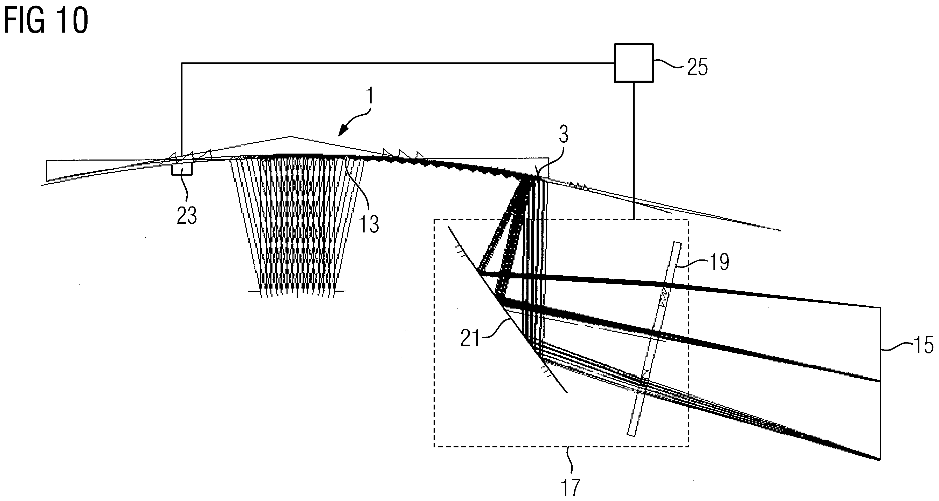

Eine Möglichkeit, den Farbquerfehler zu korrigieren, besteht darin, in einer den Lichtleiter 1 umfassenden Abbildungsvorrichtung der Einkoppelstruktur 3 des Lichtleiters 1 ein Korrekturelement vorzulagern, welches einen zum von der Beugungslinse 11 induzierten Farbquerfehler inversen Farbquerfehler generiert, so dass sich der Farbquerfehler der Beugungslinse 11 und der Farbquerfehler des Korrekturelementes gerade auf heben. Ein Beispiel für ein derartiges Korrekturelement ist in Figur 10 gezeigt. Die Figur zeigt in schematischer Darstellung ein HMD mit einem Bildgeber 15, auf dem ein Ausgangsbild angezeigt wird, welches von einer Abbildungsoptik in ein virtuelles Bild umgewandt werden soll. Diese Abbildungsoptik umfasst neben einem erfindungsgemäßen Lichtleiter 1 ein Korrekturelement 17 zum Korrigieren des Farbquerfehlers. Dieses Korrekturelement 17 umfasst im vorliegenden Ausführungsbeispiel ein klassisch refraktives optisches Element 19 und ein diffraktives optisches Element 21. Diese beiden sind derart aufeinander abgestimmt, dass sie zusammen einen Farbquerfehler induzieren, welcher den Farbquerfehler der Beugungslinse 11 der Auskoppelstruktur 13 kompensiert. Darüber hinaus können das refraktive optische Element 19 und das diffraktive optische Element 21 gegeneinander verschoben werden, wodurch sich auch ein dynamischer Farbquerfehler ausgleichen lässt. Ein dynamischer Farbquerfehler kommt durch die Augenbewegung des Nutzers zustande, welche dazu führt, dass im Feld entlang von Kanten auftretende Farbquerfehler ihre Ausdehnung verändern. Durch geeignetes Verschieben der beiden optischen Elemente 19, 21 gegeneinander kann die Veränderung der Ausdehnung des Farbquerfehlers kompensiert werden. Hierzu ist im vorliegenden Ausführungsbeispiel ein Eye-Tracker 23 zum Ermitteln der Blickrichtung vorhanden. Anhand der ermittelten Blickrichtung steuert eine Steuereinheit 25 die Relativverschiebung zwischen dem refraktiven optischen Element 19 und dem diffraktiven Element 21 des Korrekturelements 17. Wenn der dynamische Farbquerfehler nicht ausgeglichen werden soll, besteht die Möglichkeit, das refraktive optische Element 19 und das diffraktive optische Element 21 fix zueinander anzuordnen und auf den Eye-Tracker 23 sowie die Steuereinheit 25 zu verzichten.

Das Korrekturelement 17 erlaubt es zudem, durch geeignete Gestaltung des refraktiven optischen Elements 19 und/oder des diffraktiven optischen Elements 21 die bereits zuvor erwähnte Pupillenverzeichnung, die aufgrund der Leitung der Lichtstrahlen entlang der Längenkreise auftritt, auszugleichen.

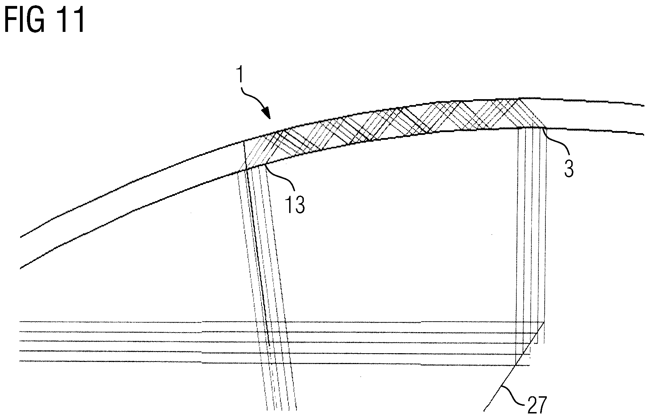

Wenn lediglich die Pupillenverzeichnung ausgeglichen werden soll, ist dies jedoch auch mit einfacheren Mitteln möglich. Figur 11 zeigt eine Abbildungsoptik für ein HMD mit einem erfindungsgemäßen Lichtleiter 1 und einem Korrekturelement, das lediglich zum Ausgleichen der Pupillenverzeichnung dient. Als Korrekturelement kommt hierbei ein Parabolspiegel 27 mit einem Krümmungsradius von 480 mm zum Einsatz. Als Krümmungsradius des Lichtleiters 1 und Brennweite der Beugungslinse der Auskoppelstruktur 13 sind hierbei wiederum 150 mm angenommen. Der Ausgangspunkt des in Figur 10 von links auf den Parabolspiegel 27 auftreffenden Strahlenbündels befindet sich außerhalb des Bildes im Brennpunkt des Parabolspiegels. Durch eine auf analoge Weise erzeugte quadratische Pupillenverzeichnung in Längsrichtung kann auch ein linearer Astigmatismus reduziert werden.

Die Pupillenverzeichnung kann statt mit den beschriebenen Korrekturelementen auch durch andere off-axis-Elemente korrigiert werden. Mit der Korrektur der Pupillenverzeichnung sind insbesondere auch größere Übertragungslängen im Lichtleiter möglich.

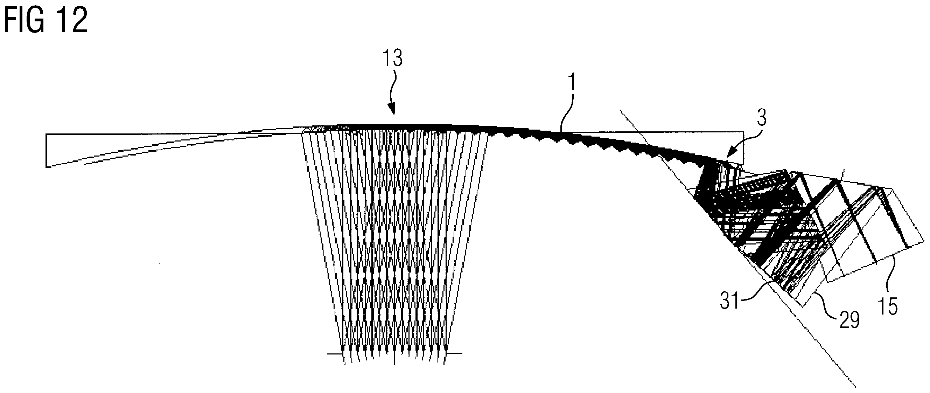

In der erfindungsgemäßen Abbildungsvorrichtung ist es möglich das Display 15 näher an der Einkoppelstruktur anzuordnen, wenn der Einkoppelstruktur ein Polarisationsstrahlteiler 29 und eine Verzögerungsplatte 32 in Form einer λ/4-Platte vorgelagert sind, wie dies in Figur 12 schematisch dargestellt ist. Die Einkopplung unter Zuhilfenahme eines Polarisationsstrahlteilers und einer Verzögerungsplatte ist bspw. in WO 2008/023367 A1, dort insbesondere mit Bezug auf Figur 3, beschrieben. Auf die Offenbarung der WO 2008/023367 A1 wird daher hinsichtlich der Einkopplung unter Zuhilfenahme eines Polarisationsstrahlteilers und einer Verzögerungsplatte verwiesen.

Die vorliegende Erfindung wurde anhand von Ausführungsbeispielen zu Erläuterungszwecken im Detail beschrieben. Für einen Fachmann ist jedoch ersichtlich, dass im Rahmen der Erfindung von den Ausführungsbeispielen abgewichen werden kann. So kann beispielsweise die Anzahl der Teilfeldwinkel größer als zwei sein und die Anzahl der zu übertragenen Farbkanäle kleiner oder größer als drei. Zudem besteht grundsätzlich die Möglichkeit, statt einer Beugungslinse eine refraktive Linse, beispielsweise eine Fresnellinse, zum Herbeiführen der zerstreuenden Wirkung vorzusehen. Wie bereits erwähnt, kann die zerstreuende Wirkung statt der Auskoppelstruktur überlagert zu sein, auch der Einkoppelstruktur überlagert sein. Zudem besteht die Möglichkeit, die zerstreuende Wirkung aufzuteilen und einen Teil der Einkoppelstruktur und den anderen Teil der Auskoppelstruktur zu überlagern. Weiterhin können andere Einkoppel- und Auskoppelstrukturen zur Anwendung kommen, bspw. reflektive Strukturen wie etwa teildurchlässige Spiegel statt diffraktiver Strukturen, oder die beschriebenen diffraktiven Strukturen können durch Blazegitter ersetzt werden. Im letzteren Fall ist es möglich, durch geeignete Wahl des Blazewinkels die Beugungsstruktur auf eine bestimmte Beugungsordnung zu optimieren. Ebenso kann die Beugungslinse als Blazegitter realisiert werden. Zum Auskoppeln eines bestimmten Wellenlängenbereiches können dann bspw. dichroitische teildurchlässige Spiegel Verwendung finden. Obwohl in den beschriebenen Ausführungsbeispielen die Auskopplungsstrukturen in der Rückfläche des Lichtleiters angeordnet sind, könne sie auch in der Vorderfläche angeordnet sein, so dass das Licht bspw. zuerst annähernd senkrecht durch die Rückfläche tritt und dann erst auf die ablenkende / beugende Struktur auf der Vorderfläche. Entsprechend kann das Licht, nach Durchlaufen des Lichtleiters durch eine ablenkende / beugende Struktur auf der Vorderfläche in Richtung auf die Rückfläche abgelenkt werden, durch die es dann bspw. annähernd senkrecht aus dem Lichtleiter austritt. Die Erfindung soll daher nicht durch die beschriebenen Ausführungsbeispiele beschränkt sein, sondern lediglich durch die angehängten Ansprüche.

### Bezugszeichenliste

- 1: sphärische Lichtleiter
- 2: divergentes Strahlenbündel
- 3: Einkoppelstruktur
- 4: Vorderfläche
- 5: Auskopplungsstruktur
- 6: Rückfläche
- 7: Längenkreis
- 8: konvergentes Strahlenbündel
- 9: Äquator
- 10: paralleles Strahlenbündel
- 11: Beugungslinse
- 13: überlagerte Auskoppelstruktur
- 15: Display
- 17: Korrekturelement
- 19: refraktives optisches Element
- 21: diffraktives optisches Element
- 23: Eye-Tracker
- 25: Steuereinheit
- 27: Korrekturelement
- 29: Polarisationsstrahlteiler
- 31: Verzögerungsplatte

## Patentansprüche

1. Sphärisch gekrümmter Lichtleiter (1) für ein HMD, wobei der Lichtleiter (1) bei bestimmungsgemäßem Gebrauch vor wenigstens einem Auge angeordnet ist und vom Auge aus gesehen eine konkave Krümmung mit einem Krümmungsradius besitzt, wobei der sphärisch gekrümmte Lichtleiter umfasst:
- eine zum Auge weisende Rückfläche (6) sowie eine vom Auge weg weisende Vorderfläche (4),
- eine Einkoppelstruktur (3) zum Einkoppeln von Licht in den Lichtleiter (1) derart, dass Licht unter Reflektion an der Vorderfläche (4) und/oder der Rückfläche (6) durch den Lichtleiter (1) geleitet wird, und
- eine Auskoppelstruktur (13) zum Auskoppeln des durch den Lichtleiter (1) geleiteten Lichtes,
wobei
der Lichtleiter (1) eine zerstreuende Struktur (11) für durch den Lichtleiter geleitetes Licht aufweist, deren Brennweite betragsmäßig kleiner oder gleich dem Krümmungsradius des Lichtleiters (1) ist,
**dadurch gekennzeichnet, dass**
die Einkoppelstruktur (3) derart ausgestaltet ist, dass sie Lichtstrahlen so in den Lichtleiter (1) einkoppelt, dass die eingekoppelten Lichtstrahlen im Lichtleiter (1) entlang von Längenkreisen (7) des Lichtleiters (1) verlaufen, und
die Auskoppelstruktur (5, 13) näher als die Einkoppelstruktur (3) an dem die Längenkreise (7) im rechten Winkel schneidenden Großkreis (9) des Lichtleiters (1) liegt.

2. Lichtleiter (1) nach Anspruch 1, **dadurch gekennzeichnet, dass** die zerstreuende Struktur (11) der Auskoppelstruktur (5, 13) und/oder der Einkoppelstruktur (3) überlagert ist.

3. Lichtleiter (1) nach Anspruch 1 oder Anspruch 2, **dadurch gekennzeichnet, dass** die zerstreuende Struktur eine Beugungslinse (11) ist.

4. Lichtleiter (1) nach Anspruch 3, **dadurch gekennzeichnet, dass** die Beugungslinse (11) Zonen umfasst, die sich in ihrer optischen Weglänge für das durch den Lichtleiter (1) geleitete Licht voneinander unterscheiden.

5. Lichtleiter (1) nach Anspruch 3, **dadurch gekennzeichnet, dass** die Beugungslinse (11) transparente und intransparente Zonen umfasst.

6. Lichtleiter (1) nach einem der Ansprüche 1 bis 5, **dadurch gekennzeichnet, dass** die zerstreuende Wirkung der zerstreuenden Struktur (11) auf die Mitte des Bildfeldes zentriert ist.

7. Lichtleiter (1) nach einem der Ansprüche 1 bis 6, **dadurch gekennzeichnet, dass** das in den Lichtleiter (1) einzukoppelnde Licht ein Winkelspektrum und/oder einen Spektralbereich besitzt und die Einkoppelstruktur (3) sowie die Auskoppelstruktur (13) jeweils mehrere Unterstrukturen (3₁, 3₂, 13₁, 13², 13¹, 13², 13³) umfassen, welche unterschiedliche Teile des Spektralbereiches und/oder unterschiedliche Teile des Winkelspektrums in den Lichtleiter (1) einkoppeln bzw. aus dem Lichtleiter (1) auskoppeln.

8. Lichtleiter (1) nach Anspruch 7, **dadurch gekennzeichnet, dass** mehrere Unterlichtleiter (1₁, 1₂, 1¹, 1², 1³) umfasst, die jeweils einen anderen der unterschiedlichen Teile des Spektralbereiches und/oder der unterschiedlichen Teile des Winkelspektrums von der Einkoppelstruktur (3) zu der Auskoppelstruktur (13) leiten.

9. Lichtleiter (1) nach einem der Ansprüche 1 bis 8, **dadurch gekennzeichnet, dass** die Einkoppelstruktur (3) derart im Lichtleiter (1) angeordnet ist, dass die Einkopplung durch die Rückfläche (6) des Lichtleiters (1) erfolgen kann.

10. Abbildungsoptik mit einem Abbildungsstrahlengang, einem Lichtleiter (1) und wenigstens einem bildformenden optischen Element, **dadurch gekennzeichnet, dass** sie einen Lichtleiter (1) nach einem der Anspruche 1 bis 9 umfasst, wobei der Lichtleiter (1) als das wenigstens eine bildformende optische Element dient.

11. Abbildungsoptik nach Anspruch 10, **dadurch gekennzeichnet, dass** der Einkoppelstruktur (3) des Lichtleiters (1) im Abbildungsstrahlengang ein Korrekturelement (17, 27) zum Vorab-Korrigieren einer vom Lichtleiter induzierten Pupillenverzeichnung vorgelagert ist.

12. Abbildungsoptik nach Anspruch 10 oder Anspruch 11, **dadurch gekennzeichnet, dass** der Einkoppelstruktur (3) des Lichtleiters (1) im Abbildungsstrahlengang eine einen vom Lichtleiter (1) induzierten Farbquerfehler kompensierende Kompensationsoptik (27) vorgelagert ist.

13. Abbildungsoptik nach einem der Ansprüche 10 bis 12, **dadurch gekennzeichnet, dass** die Kompensationsoptik (27) ein diffraktives optisches Element (21) und ein refraktives optisches Element (19) umfasst, die senkrecht zur optischen Achse des Abbildungsstrahlengangs relativ zueinander verschiebbar angeordnet sind und dass ein Eye-Tracker (23) vorhanden ist.

14. Abbildungsoptik nach einem der Ansprüche 10 bis 13, **dadurch gekennzeichnet, dass** der Einkoppelstruktur (3) des Lichtleiters (1) im Abbildungsstrahlengang ein Polarisationsstrahlteiler (29) und eine Verzögerungsplatte (31) vorgelagert sind.

15. HMD mit einem Display (15) zum Darstellen eines Ausgangsbildes und einer Abbildungsoptik zum Generieren eines virtuellen Bildes von dem Ausgangsbild, **dadurch gekennzeichnet, dass** die Abbildungsoptik eine Abbildungsoptik nach einem der Ansprüche 10 bis 14 ist.

## Claims

1. Spherically curved light guide (1) for an HMD, wherein, when used as intended, the light guide (1) is arranged in front of at least one eye and has a concave curvature with a radius of curvature as seen from the eye, wherein the spherically curved light guide comprises:
- a back surface (6) facing the eye and a front surface (4) facing away from the eye,
- an input coupling structure (3) for coupling light into the light guide (1) in such a way that light is guided through the light guide (1) with reflection at the front surface (4) and/or the back surface (6), and
- an output coupling structure (13) for coupling out the light guided through the light guide (1),
wherein
the light guide (1) has a diverging structure (11) for light guided through the light guide, the absolute value of the focal length of which structure is less than or equal to the radius of curvature of the light guide (1), **characterized in that**
the input coupling structure (3) is configured in such a way that it couples rays of light into the light guide (1) such that the rays of light coupled in pass in the light guide (1) along circles (7) of longitude of the light guide (1), and
the output coupling structure (5, 13) lies closer than the input coupling structure (3) to the great circle (9) of the light guide (1) that intersects the circles (7) of longitude at right angles.

2. Light guide (1) according to Claim 1, **characterized in that** the diverging structure (11) is superimposed on the output coupling structure (5, 13) and/or the input coupling structure (3).

3. Light guide (1) according to Claim 1 or Claim 2, **characterized in that** the diverging structure is a diffraction lens (11).

4. Light guide (1) according to Claim 3, **characterized in that** the diffraction lens (11) comprises zones which differ from one another in terms of their optical path length for the light guided through the light guide (1).

5. Light guide (1) according to Claim 3, **characterized in that** the diffraction lens (11) comprises transparent and non-transparent zones.

6. Light guide (1) according to any of Claims 1 to 5, **characterized in that** the diverging effect of the diverging structure (11) is centred on the centre of the image field.

7. Light guide (1) according to any of Claims 1 to 6, **characterized in that** the light to be coupled into the light guide (1) has an angular spectrum and/or a spectral range and the input coupling structure (3) and the output coupling structure (13) each comprise a plurality of substructures (3₁, 3₂ ,13₁, 13₂, 13¹, 13^{2 ,}13³), which respectively couple different parts of the spectral range and/or different parts of the angular spectrum into the light guide (1) and out of the light guide (1).

8. Light guide (1) according to Claim 7, **characterized in that** comprises a plurality of sub-light guides (1₁, 1₂, 1¹, 1², 1³), each of which respectively guides a different one of the different parts of the spectral range and/or of the different parts of the angular spectrum from the input coupling structure (3) to the output coupling structure (13).

9. Light guide (1) according to any of Claims 1 to 8, **characterized in that** the input coupling structure (3) is arranged in the light guide (1) in such a way that the input coupling can take place through the back surface (6) of the light guide (1).

10. Imaging optical unit comprising an imaging beam path, a light guide (1) and at least one image-forming optical element, **characterized in that** it comprises a light guide (1) according to any of Claims 1 to 9, wherein the light guide (1) serves as the at least one image-forming optical element.

11. Imaging optical unit according to Claim 10, **characterized in that** a correction element (17, 27) for correcting in advance a pupil distortion induced by the light guide is disposed upstream of the input coupling structure (3) of the light guide (1) in the imaging beam path.

12. Imaging optical unit according to Claim 10 or Claim 11, **characterized in that** a compensation optical unit (27), which compensates for a lateral chromatic aberration induced by the light guide (1), is disposed upstream of the input coupling structure (3) of the light guide (1) in the imaging beam path.

13. Imaging optical unit according to any of Claims 10 to 12, **characterized in that** the compensation optical unit (27) comprises a diffractive optical element (21) and a refractive optical element (19), which are arranged such that they are displaceable relative to one another perpendicular to the optical axis of the imaging beam path, and **in that** an eye tracker (23) is present.

14. Imaging optical unit according to any of Claims 10 to 13, **characterized in that** a polarization beam splitter (29) and a retardation plate (31) are disposed upstream of the input coupling structure (3) of the light guide (1) in the imaging beam path.

15. HMD comprising a display (15) for displaying an output image and an imaging optical unit for generating a virtual image from the output image, **characterized in that** the imaging optical unit is an imaging optical unit according to any of Claims 10 to 14.

## Revendications

1. Guide de lumière incurvé de manière sphérique (1) destiné à un visiocasque, le guide de lumière (1) étant disposé, en utilisation nominale, devant au moins un œil et possédant, vu de l'œil, une courbure concave avec un certain rayon de courbure, le guide de lumière incurvé de manière sphérique comprenant :
- une surface arrière (6) tournée vers l'œil et une surface avant (4) tournée à l'opposé de l'œil,
- une structure d'injection (3) destinée à injecter de la lumière dans le guide de lumière (1) de telle sorte que la lumière soit guidée par réflexion sur la surface avant (4) et/ou la surface arrière (6) à travers le guide de lumière (1), et
- une structure d'extraction (13) destinée à l'extraction de la lumière guidée à travers le guide de lumière (1),
dans lequel
le guide de lumière (1) comporte une structure diffusante (11) pour la lumière guidée par le guide de lumière, dont la distance focale est inférieure ou égale en valeur absolue au rayon de courbure du guide de lumière (1), **caractérisé en ce que**
la structure d'injection (3) est conçue de telle sorte qu'elle injecte des rayons lumineux dans le guide de lumière (1) de manière à ce que les rayons lumineux injectés se propagent dans le guide de lumière (1) le long de cercles longitudinaux (7) du guide de lumière (1), et
la structure d'extraction (5, 13) se situe plus près que la structure d'injection (3) du grand cercle (9) du guide de lumière (1) qui coupe à angle droit les cercles longitudinaux (7).

2. Guide de lumière (1) selon la revendication 1, **caractérisé en ce que** la structure diffusante (11) est superposée à la structure d'extraction (5, 13) et/ou à la structure d'injection (3).

3. Guide de lumière (1) selon la revendication 1 ou la revendication 2, **caractérisé en ce que** la structure diffusante est une lentille de diffraction (11).

4. Guide de lumière (1) selon la revendication 3, **caractérisé en ce que** la lentille de diffraction (11) comprend des zones qui diffèrent les unes des autres par leur longueur de chemin optique pour la lumière guidée par le guide de lumière (1).

5. Guide de lumière (1) selon la revendication 3, **caractérisé en ce que** la lentille de diffraction (11) comprend des zones transparentes et des zones non transparentes.

6. Guide de lumière (1) selon l'une quelconque des revendications 1 à 5, **caractérisé en ce que** l'effet diffusant de la structure diffusante (11) est centré sur le centre du champ de vision.

7. Guide de lumière (1) selon l'une quelconque des revendications 1 à 6, **caractérisé en ce que** la lumière à injecter dans le guide de lumière (1) possède un spectre angulaire et/ou une plage spectrale et **en ce que** la structure d'injection (3) ainsi que la structure d'extraction (13) comprennent respectivement plusieurs sous-structures (3₁, 3₂, 13₁, 13₂, 13¹, 13², 13³) qui injectent dans le guide de lumière (1) ou extraient du guide de lumière (1) différentes parties de la plage spectrale et/ou différentes parties du spectre angulaire.

8. Guide de lumière (1) selon la revendication 7, **caractérisé en ce qu'**il comprend une pluralité de sous-guides de lumière (1₁, 1₂, 1¹, 1², 1³) , qui guident respectivement une autre des différentes parties de la plage spectrale et/ou des différentes parties du spectre angulaire de la structure d'injection (3) vers la structure d'extraction (13).

9. Guide de lumière (1) selon l'une quelconque des revendications 1 à 8, **caractérisé en ce que** la structure d'injection (3) est disposée dans le guide de lumière (1) de manière à ce que l'injection puisse être effectuée par l'intermédiaire de la surface arrière (6) du guide de lumière (1).

10. Optique d'imagerie comprenant un chemin optique d'imagerie, un guide de lumière (1) et au moins un élément optique de formation d'image, **caractérisée en ce qu'**elle comprend un guide de lumière (1) selon l'une quelconque des revendications 1 à 9, le guide de lumière (1) étant utilisé en tant que ledit au moins un élément optique de formation d'image.

11. Optique d'imagerie selon la revendication 10, **caractérisée en ce qu'**un élément de correction (17, 27) destiné à corriger préalablement une distorsion pupillaire induite par le guide de lumière est placé en amont de la structure d'injection (3) du guide de lumière (1) sur le chemin optique d'imagerie.

12. Optique d'imagerie selon la revendication 10 ou la revendication 11, **caractérisée en ce qu'**une optique de compensation (27) compensant une erreur chromatique transversale induite par le guide de lumière (1) est placée en amont de la structure d'injection (3) du guide de lumière (1) sur le chemin optique d'imagerie.

13. Optique d'imagerie selon l'une quelconque des revendications 10 à 12, **caractérisée en ce que** l'optique de compensation (27) comprend un élément optique diffractant (21) et un élément optique réfractant (19) qui sont disposés de manière à pouvoir être déplacés l'un par rapport à l'autre perpendiculairement à l'axe optique du chemin optique d'imagerie, et **en ce qu'**un oculomètre (23) est présent.

14. Optique d'imagerie selon l'une quelconque des revendications 10 à 13, **caractérisée en ce qu'**un diviseur de faisceau à polarisation (29) et une lame à retard (31) sont placés en amont de la structure d'injection (3) du guide de lumière (1) sur le chemin optique d'imagerie.

15. Visiocasque comprenant un écran (15) destiné à représenter une image de sortie, et une optique d'imagerie destinée à générer une image virtuelle à partir de l'image de sortie, **caractérisé en ce que** l'optique d'imagerie est une optique d'imagerie selon l'une quelconque des revendications 10 à 14.
